# EUROPÄISCHE PATENTSCHRIFT

(11) **EP 1 451 053 B1**
(45) Veröffentlichungstag und Bekanntmachung des Hinweises auf die Patenterteilung: **03.01.2007**
(21) Anmeldenummer: 02787397.5
(22) Anmeldetag: 26.11.2002
(51) Int. Cl.: B62B 3/14, B62B 5/08

(54) **KINDERSITZ FÜR EINEN EINKAUFSWAGEN**
CHILD SEAT FOR A SHOPPING TROLLEY
SIEGE ENFANT POUR CHARIOT DE MAGASIN

(30) Priorität: 04.12.2001 DE 10159445
(43) Veröffentlichungstag der Anmeldung: 01.09.2004
(73) Patentinhaber: WANZL METALLWARENFABRIK GMBH, D-89336 Leipheim (DE)
(72) Erfinder: FROMMHERZ, Bernd, 79793 Wutöschingen/Horheim (DE)
(86) Internationale Anmeldenummer: PCT/DE2002/004326
(87) Internationale Veröffentlichungsnummer: WO 2003/047940

(56) Entgegenhaltungen:
- WO-A-02/074606
- DE-A- 19 709 689
- US-A- 2 997 311
- US-A- 4 046 394
- US-A- 6 155 580

## Beschreibung

Die Erfindung betrifft einen Kindersitz für einen Einkaufswagen, mit einer aus Kunststoff bestehenden, um eine horizontale Achse verschwenkbar am Einkaufswagen angeordneten Rückenlehne, an welcher wenigstens ein Sitz schiebebeweglich oder verschwenkbar angekoppelt ist.

Kindersitze dieser Art sind beispielsweise in der US-A-4,046,394 offenbart und werden bei Einkaufswagen verwendet, die zumindest teilweise aus Kunststoff bestehen. Die Rückenlehnen der Kindersitze dieser Wagen sind entweder als Drahtkonstruktionen oder als aus Draht und Kunststoff bestehende Gebilde oder ganz aus Kunststoff gestaltet. Letztere müssen aus Stabilitätsgründen mit Versteifungsrippen ausgestattet sein, um den in der Praxis auftretenden Belastungen Stand zu halten. Versteifungsrippen haben den Nachteil, dass sie unschön wirken und dass sich an ihnen Schmutz ablagert.

Es ist Aufgabe der Erfindung, die Rückenlehne eines Kindersitzes der hier vorliegenden Art unter Wahrung einer ausreichenden Stabilität so weiterzuentwickeln, dass die Rückenlehne möglichst glatt ausgebildet werden kann und dass diese zumindest teilweise ohne sichtbare Versteifungsrippen auskommt.

Die Lösung der Aufgabe besteht darin, dass die Rückenlehne aus wenigstens zwei ortsfest miteinander verbundenen Bauteilen besteht, deren Bauweise so gewählt ist, dass zumindest ein Teilabschnitt der Rückenlehne hohlkörperartig ausgebildet ist.

Der entscheidende Vorteil der Erfindung besteht darin, dass Versteifungsrippen an den ortsfest miteinander verbundenen Bauteilen so angeordnet sind, dass diese sich gegenüberliegend in dem wenigstens einen Teilabschnitt befinden. Sie sind somit in den hohlkörperartigen Teilabschnitten von außen nicht sichtbar untergebracht, so dass es möglich ist, die außen liegenden und ebenfalls sichtbaren Flächen der Rückenlehne völlig glatt auszubilden. So kann sich kein Schmutz absetzen und die innen befindlichen Versteifungsrippen tragen trotzdem dazu bei, die erforderliche Stabilität der Rückenlehne zu garantieren.
Ein weiterer Vorteil besteht darin, dass der wenigstens eine hohlkörperartige Teilabschnitt mit Öffnungen, Schlitzen und dergleichen versehen werden kann, an die sich, sofern erforderlich, innen gelegen, Funktionsteile oder - elemente anordnen lassen, die mit den Schlitzen oder Öffnungen z.B. Führungen, Halteeinrichtungen usw. bilden, welche zum Funktionieren und Bewegen des Kindersitzes erforderlich oder zweckmäßig sind.

Die Erfindung wird anhand von Ausfiihrungsbeispielen näher erläutert. Es zeigt
- Fig. 1: einen an einem Einkaufswagen befindlichen Kindersitz;
- Fig. 2: eine Rückenlehne des Kindersitzes in Vorderansicht;
- Fig. 3: eine aus drei Bauteilen zu bildende Rückenlehne sowie
- Fig. 4: eine Rückenlehne in Seitenansicht.

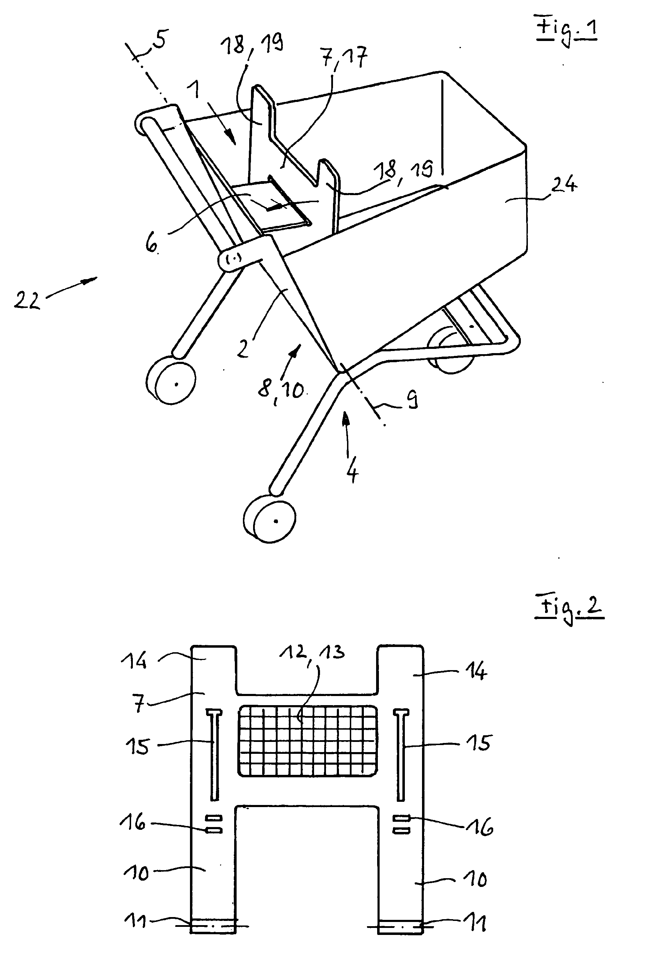

Der in Fig. 1 dargestellte, an einem Einkaufswagen 22 angeordnete Kindersitz 1 ist in Gebrauchslage dargestellt. Der Kindersitz 1 weist einen Sitz 6 und eine Rückenlehne 7 auf, wobei der Sitz 6 schiebebeweglich oder verschwenkbar mit der Rückenlehne 7 verbunden ist. Die Rückseite des Korbes 24 des Einkaufswagen 22 ist durch eine Wand 2 gebildet, die sich um eine oben liegende horizontale Achse 5 in das Korbinnere verschwenken lässt. Die Rückenlehne 7 ist mit ihrer unteren Begrenzung 8 oder mit nach unten führenden Stützen 10 um eine ebenfalls horizontale Achse 9, die sich im unteren Bereich 4 der Wand 2 befindet, an dieser begrenzt verschwenkbar gelagert. Der Sitz 6 ist dabei entweder verschwenkbar oder schiebebeweglich auch an der Wand 2 abgestützt. Diese Art von Anordnung und Konstruktion ist bekannt. Die Rückenlehne lässt sich in Pfeilrichtung an die Wand 2 heranschwenken, während sich die Wand 2 mit Sitz 6 und Rükkenlehne 7 zum Zwecke des Ineinanderschiebens mehrerer Einkaufswagen 22 um die horizontale Achse 5 in das Korbinnere schwenken lässt.

In einer Vorderansicht zeigt Fig. 2 die Rückenlehne 7 eines Kindersitzes 1. Die an den Großbuchstaben "H" erinnernde, aus Kunststoff gefertigte Rükkenlehne 7 weist zwei nach unten führende Stützen 10 auf, die mit Lagerösen 11 ausgestattet sind, um auf der horizontalen Achse 9 gelagert zu werden. An die Stützen 10 schließt nach oben ein Stützbereich 12 an, an den sich ein im Kindersitz 1 sitzendes Kind anlehnen kann. Die Rückenlehne 7 endet nach oben mit zwei Vorsprüngen 14, die dazu dienen, die ausgeklappte, in Gebrauchslage befindliche Rückenlehne 7 beim Ineinanderschieben von Einkaufswagen 22 von selbst in die Nichtgebrauchslage zu bringen. Der Stützbereich 12 kann mittig eine Gitterstruktur 13 aufweisen. Zu beiden Seiten der Gitterstruktur 13 sind von unten nach oben gerichtete, durch Schlitze gebildete Führungen 15 zur schiebebeweglichen Aufnahme von Vorsprüngen vorgesehen, die sich am Sitz 6 befinden. Unterhalb der Führungen 15 sind Öffnungen 16 angeordnet, die beispielsweise zur Aufnahme eines Gurtes zum Angurten eines Kindes bestimmt sind.

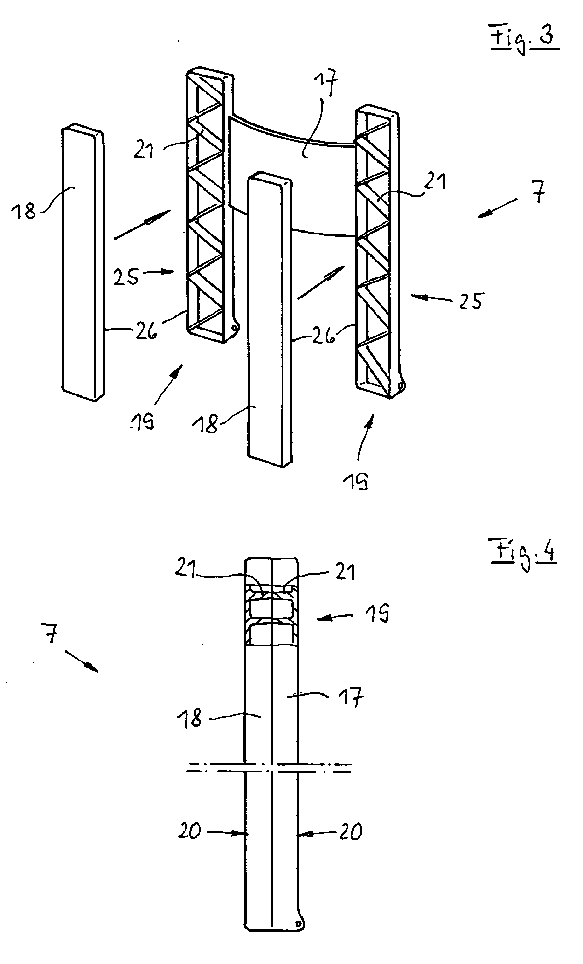

Aus Fig. 3 ist ersichtlich, dass die Rückenlehne 7 aus drei Bauteilen 17, 18 besteht, die alle aus Kunststoff gefertigt sind. Ein erstes Bauteil 17 ist wie die gesamte Rückenlehne 7 identisch so gestaltet, wie dies in Fig. 2 ersichtlich ist. Die beiden anderen oder zweiten Bauteile 18 sind länglich ausgebildet und bilden zusammen mit dem ersten Bauteil 17 dessen Schenkel 25 dann, wenn wie in der Zeichnung durch Pfeile angedeutet, die beiden Bauteile 18 mit dem ersten Bauteil 17 über ihre gemeinsamen Ränder 26 zusammengefügt werden. Das Zusammenfügen kann auf verschiedene bekannte Art erfolgen. Reibschweißen, Kleben, Stecken oder Verschrauben sind einige dieser Möglichkeiten.

In einer Seitenansicht zeigt Fig. 4 eine Rückenlehne 7 in Seitenansicht. Man erkennt das erste H-förmige Bauteil 17 und eines der beiden anderen Bauteile 18 ortsfest aneinandergefügt. Die Bauweise der Bauteile 17, 18, z.B. als Halbschalen, ist so gewählt, dass zumindest ein Teilabschnitt 19 der Rückenlehne 7 hohlkörperartig ausgebildet ist, wobei in diesem Teilabschnitt 19 Verstärkungsrippen 21 angeordnet sind, die im Inneren des Teilabschnittes 19 befindlich, sich gegenüberliegend angeordnet sind. Die Außenflächen 20 der Bauteile 17, 18 sind dort, wo es zweckdienlich und nützlich ist, glatt ausgebildet, da sich die Versteifungsrippen 21 innen befinden. Es ist vorteilhaft, Funktionselemente wie Lagerösen 11, Führungen 15, Öffnungen 16 und dergleichen am ersten Bauteil 17 vorzusehen und dem wenigstens einen zweiten Bauteil 18 nur eine stabilisierende Funktion zuzuordnen.

Der Fachmann ist in der Wahl der Gestaltung und in der Verwendung von zwei oder mehr Bauteilen 17, 18 völlig frei. Die Rückenlehne 7 kann z.B. nur aus einem ersten Bauteil 17 und aus einem zweiten Bauteil 18 bestehen, die ortsfest zusammengefügt sind. Ebenso ist es möglich, beispielsweise dem ersten Bauteil 17 drei zweite Bauteile 18 zuzuordnen. Möglich ist auch ein erstes und ein zweites Bauteil 17 und 18 so auszubilden, dass ein gesamter großer Teilabschnitt 19, der sogar die ganze Grundfläche der Rükkenlehne 7 umfassen kann, hohlkörperartig gestaltet ist. Den Variationsmöglichkeiten sind im Grunde genommen keine Grenzen gesetzt. Wichtig ist, dass an den dafür notwendigen Stellen der Rückenlehne 7 Hohlräume oder Kammern gebildet sind, in welchen sich von außen nicht sichtbar Versteifungsrippen 21 oder andere funktionale Elemente befinden können, die wiederum zu einer ausreichenden Stabilität und/oder zur Funktion der Rükkenlehne 7 beitragen.

## Patentansprüche

1. Kindersitz (1) für einen Einkaufswagen (22), mit einer aus Kunststoff bestehenden, um eine horizontale Achse (9) verschwenkbar am Einkaufswagen (22) anzuordnenden Rückenlehne (7), an welcher wenigstens ein Sitz (6) schiebebeweglich oder verschwenkbar angekoppelt ist, **dadurch gekennzeichnet, dass** die Rückenlehne (7) aus wenigstens zwei ortsfest miteinander verbundenen Bauteilen (17, 18) besteht, deren Bauweise so gewählt ist, dass zumindest ein Teilabschnitt (19) der Rückenlehne (7) hohlkörperartig ausgebildet ist.

2. Kindersitz nach Anspruch 1, **dadurch gekennzeichnet, dass** die Rükkenlehne (7) aus einem ersten Bauteil (17) und aus zwei zweiten Bauteilen (18) gebildet ist.

3. Kindersitz nach Anspruch 1 oder 2, **dadurch gekennzeichnet, dass** die Bauteile (17, 18) als Halbschalen ausgebildet sind.

4. Kindersitz nach einem der Ansprüche 1 bis 3, **dadurch gekennzeichnet, dass** im wenigstens einen Teilabschnitt (19) innen liegende Verstärkungsrippen (21) vorgesehen sind.

5. Kindersitz nach einem der Ansprüche 1 bis 4, **dadurch gekennzeichnet, dass** das erste Bauteil (17) den gleichen Grundriss, z.B. H-förmig, aufweist, wie die gesamte Rückenlehne (7).

6. Kindersitz nach einem der Ansprüche 1 bis 5, **dadurch gekennzeichnet, dass** Funktionselemente wie z.B. Lagerösen (11), Führungen (15) und Öffnungen (16) am ersten Bauteil (17) angeordnet sind.

## Claims

1. A child seat (1) for a shopping trolley (22), comprising a back rest (7) made of plastic to be arranged on the shopping trolley (22) so as to be pivotable about a horizontal axis (9) and to which at least one seat (6) is slidably or pivotably connected, **characterised in that** the back rest (7) comprises at least two parts (17, 18) fixedly connected to one another and constructed so that at least one portion (19) of the back rest (7) is formed as a hollow body.

2. A child seat according to claim 1, **characterised in that** the back rest (7) is formed from one first part (17) and two second parts (18).

3. A child seat according to claim 1 or 2, **characterised in that** the parts (17, 18) are formed as half-shells.

4. A child seat according to any one of claims 1 to 3, **characterised in that** internal reinforcing ribs (21) are provided in the at least one portion (19).

5. A child seat according to any one of claims 1 to 4, **characterised in that** the first part (17) has the same contour, i.e. H-shaped, as the overall back rest (7).

6. A child seat according to any one of claims 1 to 5, **characterised in that** functional elements such as bearing lugs (11), guides (15) and openings (16) are arranged on the first part (17).

## Revendications

1. Siège enfant (1) pour un chariot de supermarché (22), avec un dossier (7) constitué de matière synthétique, devant être agencé sur le chariot de supermarché (22) de manière à pouvoir pivoter autour d'un axe horizontal (9), auquel au moins un siège (6) est accouplé de manière à pouvoir être coulissé ou pivoté, **caractérisé en ce que** le dossier (7) se compose d'au moins deux éléments constitutifs (17, 18) reliés l'un à l'autre de façon fixe, dont le mode de construction est choisi de sorte qu'au moins un segment (19) du dossier (7) soit conçu à la manière d'un corps creux.

2. Siège enfant selon la revendication 1, **caractérisé en ce que** le dossier (7) est formé par un premier élément constitutif (17) et par deux seconds éléments constitutifs (18).

3. Siège enfant selon la revendication 1 ou 2, **caractérisé en ce que** les éléments constitutifs (17, 18) sont conçus comme des demi-coques.

4. Siège enfant selon l'une quelconque des revendications 1 à 3, **caractérisé en ce que**, dans au moins un segment (19), des nervures de renforcement (21) sont prévues à l'intérieur de celui-ci.

5. Siège enfant selon l'une quelconque des revendications 1 à 4, **caractérisé en ce que** le premier élément constitutif (17) présente le même tracé, par exemple en forme de H que l'ensemble du dossier (7).

6. Siège enfant selon l'une quelconque des revendications 1 à 5, **caractérisé en ce que** des éléments fonctionnels, comme par exemple des oeillets de palier (11), des guidages (15) et des ouvertures (16) sont agencés sur le premier élément constitutif (17).
